# EUROPEAN PATENT APPLICATION

(11) **EP 2 023 186 A2**
(43) Date of publication of application: **11.02.2009**
(21) Application number: 08012235.1
(22) Date of filing: 07.07.2008
(51) Int. Cl.: G02F 1/13

(54) **Robust electrical connection between LCD substrates**

(30) Priority: 31.07.2007 JP 2007198398
(71) Applicant: Hitachi Displays, Ltd., Mobara-shi Chiba (JP)
(72) Inventor: Abe, Hiroyuki, Mobara-shi Chiba-ken (JP); Asuma, Hiroaki, Mobara-shi Chiba-ken (JP); Kamada, Takamitsu, Mobara-shi Chiba-ken (JP)
(74) Representative: Beetz & Partner

(57) **Abstract**

A more reliable electrical connection scheme suitable for inter-substrate connections in an active matrix IPS-type LCD display is disclosed. To reduce display noise, the substrate (11) not having the TFT electrode circuitry is provided with a conductive film (CD) on its surface which does not contact the liquid crystal layer. A connecting member (14) connects this film to a GND pad electrode (15) mounted on the TFT substrate (12). This pad, in turn, is connected to a GND terminal formed on a flexible PCB (FPC) to which a GND reference voltage is applied.
A conductive film (metal or transparent) is formed on the TFT substrate, below the GND pad electrode (15) which is connected to the GND terminal by a first connection line. At least one contact hole (16) connecting the GND pad electrode and the conductive film is arranged through an intervening insulator film.
The pad and conducting layer scheme is less susceptible to cracking associated with insulating layers which can lead to breaks in the electrical connection.

## Description

The present application claims priority from Japanese application JP2007-198398 filed on July 31, 2007, the content of which is hereby incorporated by reference into this application.

### BACKGROUND OF THE INVENTION

### 1. Field of the invention

The present invention relates to a liquid crystal display device, and more particularly to a technique which is effectively applicable to a liquid crystal display device which mounts a back-surface-side transparent conductive film on one substrate of the liquid crystal display device.

### 2. Description of Related Art

As a liquid crystal display device, there has been known an IPS (In Plane Switching) -type liquid crystal display device. In this IPS-type liquid crystal display device, pixel electrodes and counter electrodes are formed on the same substrate, and liquid crystal is rotated within a planar surface of the substrate by applying an electric field between the pixel electrodes and the counter electrodes thus controlling a contrast. Accordingly, the IPS-type liquid crystal display device possesses a characteristic that a tone of a display image is not reversed when a screen is viewed from an oblique angle.

In an IPS-type liquid crystal display panel, different from a TN-type liquid crystal display panel or a VA-type liquid crystal display panel, a counter electrode is not formed on a substrate on which color filters are formed. Accordingly, for reducing display noises or the like, a back-surface-side transparent conductive film is formed on the substrate on which the color filters and the like are formed (see JP-A-9-105918 (patent document 1)).

The back-surface-side transparent conductive film is electrically connected with a GND pad electrode formed on the substrate on which thin-film transistors and the like are formed using conductive members. Further, the GND pad electrode is connected with a GND terminal formed on a flexible printed circuit board and hence, a reference voltage GND is supplied to the back-surface-side transparent conductive film.

### SUMMARY OF THE INVENTION

The above-described GND pad electrode and a GND line which connects the GND pad electrode and the GND terminal formed on the flexible printed circuit board are formed on an insulation film.

However, in the structure of the GND pad electrode of the conventional liquid crystal display device, due to a stress generated in the insulation film, there may be a case that a cracks occur in the GND pad electrode or the GND line thus giving rise to the occurrence of a conduction (connection) failure between the back-surface-side transparent conductive film and the GND terminal formed on the flexible printed circuit board.

The present invention has been made to overcome the above-mentioned drawbacks on the related art, and it is an obj ect of the present invention to provide, in a liquid crystal display device which mounts a back-surface conductive film on one substrate, a technique which can surely supply a reference potential to the back-surface conductive film.

The above-mentioned and other objects and novel features of the present invention will become apparent based on the description of this specification and attached drawings.

To briefly explain typical inventions among inventions disclosed in this specification, they are as follows.
(1) The present invention is characterized in that, in a liquid crystal display device including a first substrate, a second substrate, and liquid crystal sandwiched between the first substrate and the second substrate, the second substrate includes a back-surface conductive film on a surface thereof opposite to the liquid crystal, and the first substrate includes a pad electrode which is formed on the first substrate and is electrically connected with the back-surface conductive film via a conductive member, a conductive film which is formed on the first substrate and below the pad electrode, a first connection line which connects the conductive film and a reference voltage terminal, and at least one contact hole which connects the pad electrode and the conductive film.
(2) In the liquid crystal display device having the constitution (1), the at least one contact hole is covered with the second substrate.
(3) In the liquid crystal display device having the constitution (1) or (2), the conductive film of the first substrate is formed of a metal film.
(4) In the liquid crystal display device having the constitution (1) or (2), the conductive film of the first substrate is formed of a transparent conductive film.
(5) The present invention is characterized in that, in a liquid crystal display device including a first substrate, a second substrate, and liquid crystal sandwiched between the first substrate and the second substrate, the second substrate includes a back-surface conductive film on a surface thereof opposite to the liquid crystal, and the first substrate includes a pad electrode which is formed on the first substrate and is electrically connected with the back-surface conductive film via a conductive member, a first conductive film which is formed on the first substrate and below the pad electrode, a second conductive film which is formed on the first substrate and below the first conductive film, a first connection line which connects the second conductive film and a reference voltage terminal, a contact portion which connects the pad electrode and the first conductive film, and at least one first contact hole which connects the pad electrode and the second conductive film.
(6) In the liquid crystal display device having the constitution (5), the contact portion includes at least one second contact hole which connects the pad electrode and the second conductive film and at least one third contact hole which connects the pad electrode and the first conductive film.
(7) In the liquid crystal display device having the constitution (5) or (6), the at least one first contact hole is covered with the second substrate.
(8) In the liquid crystal display device having any one of the constitutions (5) to (7), the first conductive film is formed of a transparent conductive film, and the second conductive film is formed of a metal film.
(9) The present invention is characterized in that, in a liquid crystal display device including a first substrate, a second substrate, and liquid crystal sandwiched between the first substrate and the second substrate, the second substrate includes a back-surface conductive film on a surface thereof opposite to the liquid crystal, the first substrate includes a conductive film which is formed below a surface of the first substrate, a first connection line which connects the conductive film and a reference voltage terminal, and an opening portion from which the conductive film is exposed, and the conductive film is electrically connected with the back-surface conductive film via a conductive member in the inside of the opening portion.
(10) In the liquid crystal display device having the constitution (9), a portion of the opening portion is covered with the second substrate.
(11) In the liquid crystal display device having the constitution (9) or (10), the conductive film of the first substrate is formed of a metal film.
(12) In the liquid crystal display device having the constitution (9) or (10), the conductive film of the first substrate is formed of a transparent conductive film.
(13) The present invention is characterized in that, in a liquid crystal display device including a first substrate, a second substrate, and liquid crystal sandwiched between the first substrate and the second substrate, the second substrate includes a back-surface conductive film on a surface thereof opposite to the liquid crystal, the first substrate includes a conductive film which is formed below a surface of the first substrate, a first connection line which connects the conductive film and a reference voltage terminal, an opening portion from which the conductive film is exposed, and a pad electrode which is formed on the first substrate and covers the opening portion, and the pad electrode is connected with the conductive film in the inside of the opening portion and is electrically connected with the back-surface conductive film via a conductive member in the inside of the opening portion.
(14) In the liquid crystal display device having the constitution (13), a portion of the opening portion is covered with the second substrate.
(15) In the liquid crystal display device having the constitution (13) or (14), the conductive film of the first substrate is formed of a metal film.
(16) In the liquid crystal display device having the constitution (13) or (14), the conductive film of the first substrate is formed of a transparent conductive film.
(17) In the liquid crystal display device having the constitution (4), (8) or (16), a silicon nitride film is arranged between the pad electrode of the first substrate and the transparent conductive film of the first substrate.
(18) In the liquid crystal display device having any one of the constitutions (1) to (8) or (13) to (17), the liquid crystal display device includes a second connection line which connects the pad electrode and the reference voltage terminal.
(19) In the liquid crystal display device having any one of the constitutions (1) to (8) or (13) to (18), the pad electrode is formed of a transparent conductive film.

To briefly explain advantageous effects obtained by typical inventions among inventions disclosed in this specification, they are as follows.

According to the present invention, in the liquid crystal display device which mounts the back-surface conductive film on one substrate, it is possible to surely supply a reference potential to the back-surface conductive film.

### BRIEF DESCRIPTION OF THE DRAWINGS

Fig. 1 is a plan view showing the schematic constitution of a liquid crystal display device of an embodiment 1 according to the present invention;
Fig. 2 is a side view showing the schematic constitution of the liquid crystal display device of the embodiment 1 according to the present invention;
Fig. 3 is a plan view showing the constitution of a GND pad electrode of the liquid crystal display device of the embodiment 1 according to the present invention;
Fig. 4 is a cross-sectional view showing the cross-sectional structure of the GND pad electrode taken along a line A-A' in Fig. 3;
Fig. 5 is a cross-sectional view showing the cross-sectional structure of the GND pad electrode taken along a line B-B' in Fig. 3;
Fig. 6 is a cross-sectional view showing the cross-sectional structure of the GND pad electrode taken along a line C-C' in Fig. 3;
Fig. 7 is a plan view showing the constitution of a GND pad electrode of a liquid crystal display device of an embodiment 2 according to the present invention;
Fig. 8 is a cross-sectional view showing the cross-sectional structure of the GND pad electrode of the liquid crystal display device of the embodiment 2 according to the present invention;
Fig. 9 is a plan view showing the constitution of a GND pad electrode of a liquid crystal display device of an embodiment 3 according to the present invention;
Fig. 10 is a cross-sectional view showing the cross-sectional structure of the GND pad electrode of the liquid crystal display device of the embodiment 3 according to the present invention;
Fig. 11 is a plan view showing the constitution of a GND pad electrode of a conventional liquid crystal display device; and
Fig. 12 is a cross-sectional view showing the cross-sectional structure of a GND pad electrode portion of the conventional liquid crystal display device.

### DESCRIPTION OF THE PREFERRED EMBODIMENT

Hereinafter, embodiments of the present invention are explained in detail in conjunction with drawings.

Here, in all drawings for explaining the embodiments, parts having identical functions are given same symbols and their repeated explanation is omitted.

### [Embodiment 1]

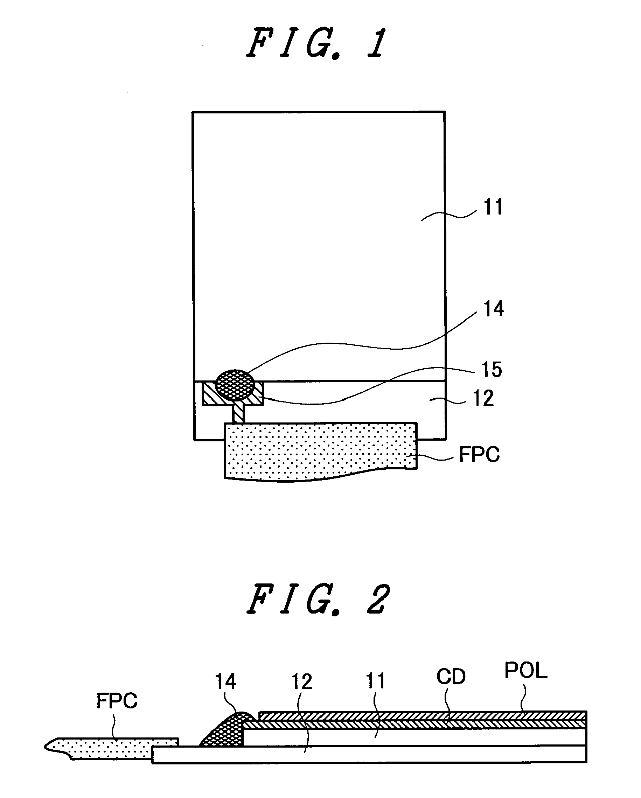

Fig. 1 is a plan view showing the schematic constitution of a liquid crystal display device of an embodiment 1 according to the present invention, and Fig. 2 is a side view showing the schematic constitution of the liquid crystal display device of the embodiment 1 according to the present invention. The liquid crystal display device of this embodiment is used as a display portion of a mobile phone or the like, and is a small-type TFT-method liquid crystal display device.

As shown in Fig. 1 and Fig. 2, a liquid crystal display panel of this embodiment is configured such that a first substrate (hereinafter, referred to as a TFT substrate) 12 on which pixel electrodes, thin film transistors and the like are formed and a second substrate (hereinafter, referred to as a CF substrate) 11 on which color filters and the like are formed overlap with each other with a predetermined distance therebetween. Both substrates are adhered to each other using a sealing member which is formed into a frame shape in the vicinity of a peripheral portion between both substrates. Liquid crystal is filled and sealed into a space defined inside the sealing member between both substrates through a liquid-crystal sealing port which is formed in a portion of the sealing member. A polarizer POL is adhered to the outer surfaces of both substrates (in the drawing, polarizer adhered to the TFT substrate 12 being omitted). As described above, the liquid crystal display device of this embodiment is configured to sandwich liquid crystal between the pair of substrates.

Further, the TFT substrate 12 has an area larger than an area of the CF substrate 11. On a region of the TFT substrate 12 where the TFT substrate 12 does not face the CF substrate 11 in an opposed manner, a semiconductor chip (not shown in the drawing) which constitutes a driver for driving the thin film transistors is mounted and, further, on a peripheral portion of one side of the region, a flexible printed circuit board (FPC) is mounted.

In the IPS-type liquid crystal display panel, different from a TN-type liquid crystal display panel or a VA-type liquid crystal display panel, a counter electrode (CT) is not arranged on the CF substrate 11 on which the color filters are mounted. Accordingly, for reducing display noises or the like, as shown in Fig. 2, a back-surface-side transparent conductive film (CD) is formed on an outer surface of the CF substrate 11. Here, as shown in Fig. 2, the polarizer (POL) is formed on the back-surface-side transparent conductive film (CD).

As shown in Fig. 1 and Fig. 2, for example, the back-surface-side transparent conductive film (CD) is electrically connected with a GND pad electrode 15 formed on the TFT substrate 12 using a conductive member 14 formed of a conductive resin film or the like. Here, the GND pad electrode 15 is connected with a GND terminal (not shown in the drawing) formed on a peripheral portion of one side of the region of the TFT substrate 12 where the TFT substrate 12 does not face the CF substrate 11 in an opposed manner. Further, the GND terminal is connected with a GND terminal formed on a side of the flexible printed circuit board (FPC) and hence, a reference voltage GND is supplied to the back-surface-side transparent conductive film (CD).

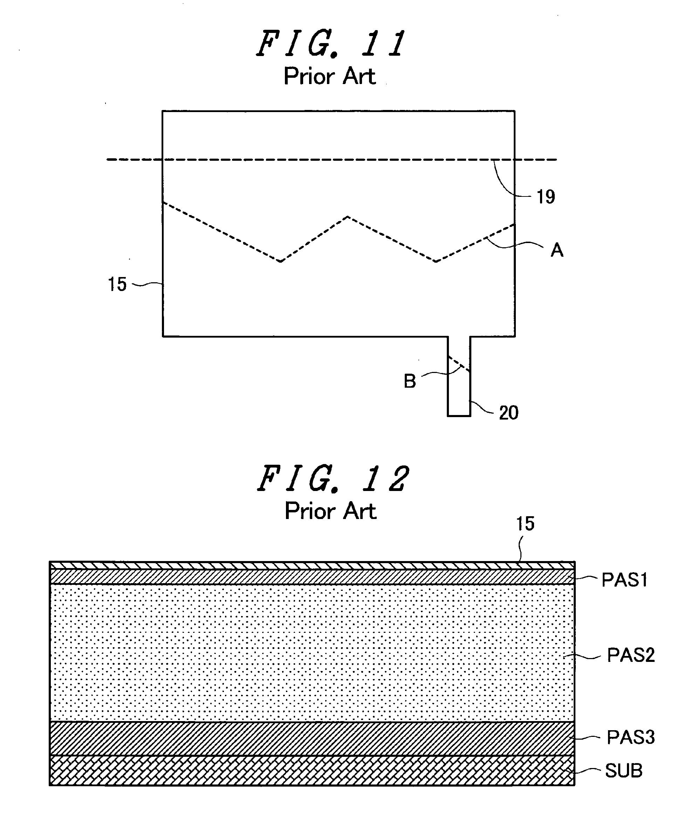

Fig. 11 is a plan view showing the constitution of a GND pad electrode 15 of a conventional liquid crystal display device, and Fig. 12 is a cross-sectional view showing the cross-sectional structure of the GND pad electrode 15 of the conventional liquid crystal display device.

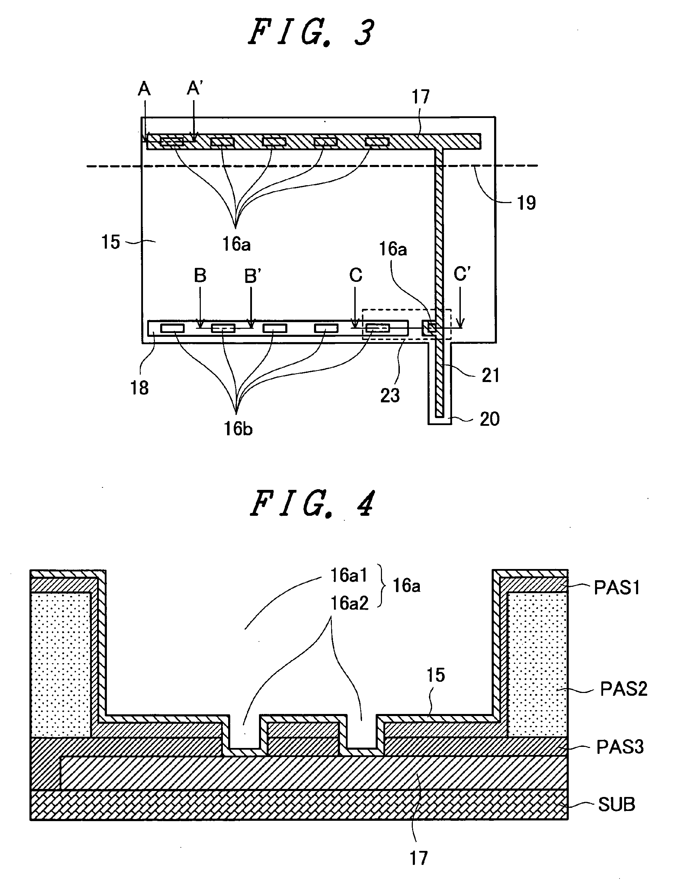

Here, in Fig. 12 and in Fig. 4, Fig. 5, Fig. 6, Fig. 8, and Fig. 10 described later, symbols PAS1 to PAS3 respectively indicate interlayer insulation film, wherein the interlayer insulation film (PAS1) and the interlayer insulation film (PAS3) are formed of a silicon nitride (SiN) film, for example, and the interlayer insulation film (PAS2) is formed of a photo-curing polymer film. Further, symbol SUB indicates a transparent substrate such as a glass substrate or a plastic substrate, for example. Further, in Fig. 11, and in Fig. 3, Fig. 7, and Fig. 9 described later, numeral 19 indicates an edge (or an edge of a black matrix (BM)) of the CF substrate 11.

As shown in Fig. 11, the GND pad electrode 15 of the conventional liquid crystal display device is formed of a rectangular transparent electrode, and the GND pad electrode 15 is made of ITO or the like, for example. Further, the GND pad electrode 15 is connected with the GND terminal (not shown in the drawing) which is formed on a peripheral portion of one side of the region of the TFT substrate 12 where the TFT substrate 12 does not face the CF substrate 11 in an opposed manner using a GND line 20.

Here, as shown in Fig. 12, the above-mentioned GND pad electrode 15 and the GND line 20 are formed on the interlayer insulation film (PAS1).

However, as described above, in the structure of the GND pad electrode of the conventional liquid crystal display device, due to a stress generated in the interlayer insulation film (PAS1), there may be a case that cracks occur in the GND pad electrode 15 as indicated by A in Fig. 11 or cracks occur in the GND line 20 as indicated by B in Fig. 11 thus giving rise to the occurrence of a conduction (connection) failure between the back-surface-side transparent conductive film (CD) and the GND terminal of the flexible printed circuit board (FPC).

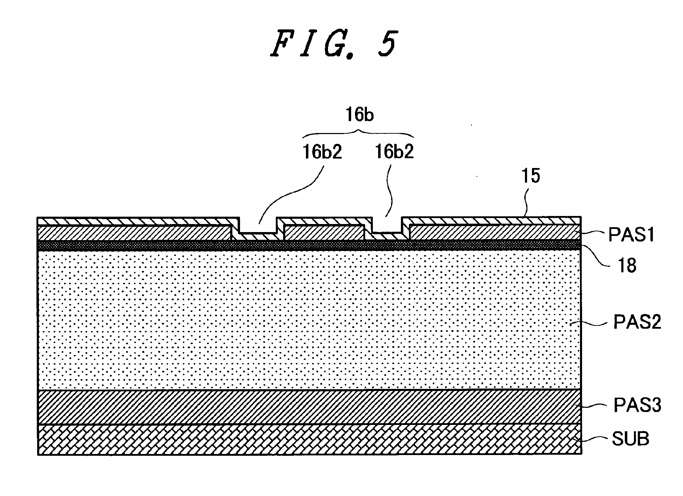

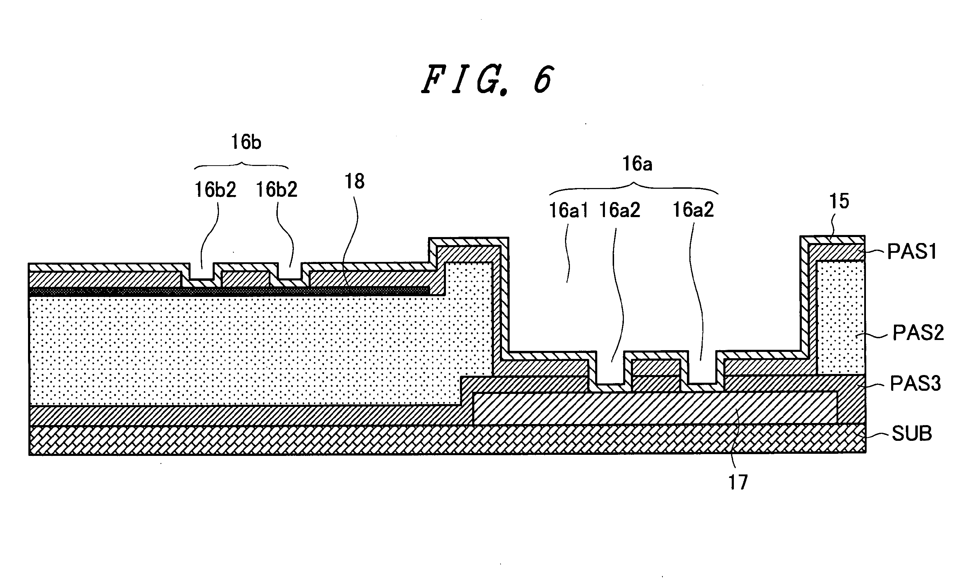

Fig. 3 is a plan view showing the constitution of the GND pad electrode 15 of the liquid crystal display device of this embodiment, Fig. 4 is a cross-sectional view showing the cross-sectional structure of the GND pad electrode 15 taken along a line A-A' in Fig. 3, Fig. 5 is a cross-sectional view showing the cross-sectional structure of the GND pad electrode 15 taken along a line B-B' in Fig. 3, and Fig. 6 is a cross-sectional view showing the cross-sectional structure of the GND pad electrode 15 taken along a line C-C' in Fig. 3.

As shown in Fig. 3, the GND pad electrode 15 of the liquid crystal display device of this embodiment is also formed of a rectangular transparent substrate, and the GND pad electrode 15 is made of ITO or the like, for example. Further, the GND pad electrode 15 is connected with a GND terminal (not shown in the drawing) which is formed on a peripheral portion of one side of the region of the TFT substrate 12 where the TFT substrate 12 does not face the CF substrate 11 in an opposed manner using the GND line 20.

In this embodiment, a metal film 17 and the GND line 21 are formed on the substrate (SUB). The metal film 17 is formed into an elongated strip-shape and, at the same time, is connected with a GND terminal (not shown in the drawing) formed on a peripheral portion of one side of the region of the TFT substrate 12 where the TFT substrate 12 does not face the CF substrate 11 in an opposed manner using the GND line 21. Here, the metal film 17 and the GND line 21 are made of Al, Al alloy or the like, for example.

As shown in Fig. 4, the metal film 17 is electrically connected with the GND pad electrode 15 via contact holes 16a. Here, although five contact holes 16a are formed in Fig. 3, it is sufficient to form at least one contact hole 16a.

Fig. 4 shows a case in which the contact hole 16a is formed of two holes, that is, a hole (16a1) formed in the interlayer insulation film (PAS2) and a hole (16a2) formed in the interlayer insulation film (PAS1) and the interlayer insulation film (PAS3). Here, it is sufficient to form at least one hole (16a2).

In this embodiment, the contact hole 16a is provided for electrically connecting the metal film 17 and the GND pad electrode 15 and hence, it is sufficient to form one contact hole 16a. However, by forming a plurality of contact holes 16a, it is possible to enhance the redundancy of the electric connection.

Further, as shown in Fig. 4, in a region where the contact hole 16a is formed, the interlayer insulation film (PAS2) is eliminated (16a1) and hence, the hole 16a2 is formed in the interlayer insulation films PAS1, PAS3.

Further, in this embodiment, the liquid crystal display device includes an elongated strip-shaped transparent conductive film 18 which is formed on the interlayer insulation film (PAS2). Here, the transparent conductive film 18 is made of ITO or the like, for example, and is formed together with the counter electrode (CT) in the same step.

As shown in Fig. 5, the transparent conductive film 18 is electrically connected with the GND pad electrode 15 via the contact holes 16b. In Fig. 5, although the contact hole 16b is formed of two holes (16b2) formed in the interlayer insulation film (PAS1), it is sufficient to form at least one hole (16b2) .

Further, the GND pad electrode 15 is connected with the metal film 17 via the contact hole 16a. Here in Fig. 3, five contact holes 16a are formed in the interlayer insulation film (PAS1).

In this embodiment, the contact hole 16b is provided for electrically connecting the transparent conductive film 18 and the GND pad electrode 15, while the contact hole 16a is provided for electrically connecting the GND pad electrode 15 and the metal film 17. Accordingly, it is sufficient to form at least one contact hole 16a and one contact hole 16b. However, by forming a plurality of contact holes 16a, 16b, it is possible to enhance the redundancy of the electric connection. Further, as shown in Fig. 5, the contact hole 16b is formed in the interlayer insulation film (PAS1).

Fig. 6 is a cross-sectional view of the GND pad electrode 15 taken along a line C-C' in Fig. 3, and shows a contact portion which is surrounded by a dotted-line frame 23 in Fig. 3. The transparent conductive film 18 and the metal film 17 are electrically connected with each other via the contact hole 16b, the GND pad electrode 15 and the contact hole 16a.

In this embodiment, due to a stress generated in the interlayer insulation film (PAS1), even when cracks occur in the GND pad electrode 15 as indicated by A in Fig. 11 or cracks occur in the GND line 20 as indicated by B in Fig. 11, with the provision of the metal film 17 and the GND line 21, the back-surface-side transparent conductive film (CD) and the GND terminal of the flexible printed circuit board (FPC) are electrically connected with each other and hence, it is possible to prevent the occurrence of the conduction (connection) failure between the back-surface-side transparent conductive film (CD) and the GND terminal of the flexible printed circuit board (FPC).

Further, in this embodiment, the metal film 17 can be formed in a region where the TFT substrate 12 and the CF substrate 11 face each other in an opposed manner and hence, it is possible to prevent the metal film 17 from being viewed from the outside in appearance.

Here, in this embodiment, the back-surface-side transparent conductive film (CD) and the GND terminal of the flexible printed circuit board (FPC) are electrically connected with each other via the metal film 17 and the GND line 21 and hence, the GND line 20 is not always necessary. However, by forming the GND lines 20, 21, it is possible to further enhance the redundancy of the electric connection.

In the same manner as described above, the transparent conductive film 18 is not always necessary. However, by forming the transparent conductive film 18, the contact hole 16b and the contact portion 23 (for example, as shown in Fig. 6), it is possible to further enhance the redundancy of the electric connection.

Still further, a transparent conductive film formed on the interlayer insulation film (PAS2) may be used in place of the metal film 17.

### [Embodiment 2]

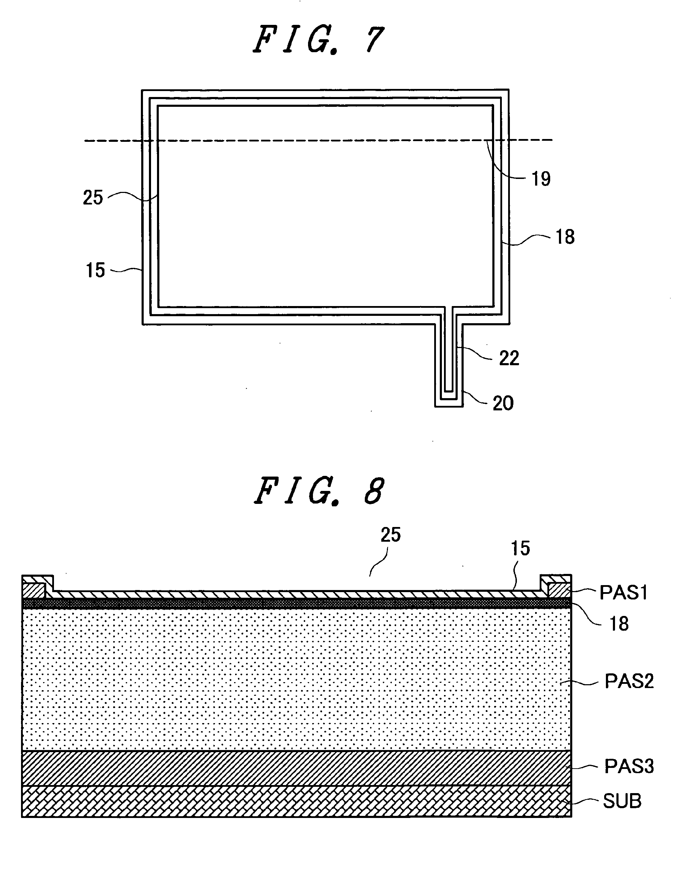

Fig. 7 is a plan view showing the constitution of a GND pad electrode 15 of a liquid crystal display device of an embodiment 2 according to the present invention, and Fig. 8 is a cross-sectional view showing the cross-sectional structure of the GND pad electrode of the liquid crystal display device of the embodiment 2 according to the present invention.

As shown in Fig. 7, the GND pad electrode 15 of the liquid crystal display device of this embodiment is also formed of a rectangular transparent electrode, and the GND pad electrode 15 is made of ITO or the like, for example. Further, the GND pad electrode 15 is connected with a GND terminal (not shown in the drawing) formed on a peripheral portion of one side of a region of a TFT substrate 12 where the TFT substrate 12 does not face a CF substrate 11 in an opposed manner using a GND line 20.

In this embodiment, the GND pad electrode 15 includes a transparent conductive film 18 formed on an interlayer insulation film (PAS2) and a GND line 22. The transparent conductive film 18 is connected with the GND terminal (not shown in the drawing) formed on the peripheral portion of one side of the region of the TFT substrate 12 where the TFT substrate 12 does not face the CF substrate 11 in an opposed manner using a GND line 22. Here, the transparent conductive film 18 and the GND line 22 are made of ITO or the like, for example, and are formed together with the counter electrode (CT) in the same step.

In this embodiment, the transparent conductive film 18 is also formed into a rectangular shape, and has an area substantially equal to an area of the GND pad electrode 15. Here, the area of the transparent conductive film 18 may preferably be 80% to 120% of the area of the GND pad electrode 15.

Further, in this embodiment, an opening portion 25 which exposes a most portion of the transparent conductive film 18 (preferably 80% or more of the transparent conductive film 18) is formed in the interlayer insulation film (PAS1). The GND pad electrode 15 is formed with a size which allows the GND pad electrode 15 to cover the opening portion 25.

Accordingly, in this embodiment, even when a stress is generated in the interlayer insulation film (PAS1), there exists no possibility that cracks occur in the GND pad electrode 15 as indicated by A in Fig. 11 or cracks occur in the GND line 20 as indicated by B in Fig. 11 and hence, it is possible to prevent the occurrence of the conduction (connection) failure between the back-surface-side transparent conductive film (CD) and the GND terminal of the flexible printed circuit board (FPC) .

Here, in this embodiment, the back-surface-side transparent conductive film (CD) and the GND terminal of the flexible printed circuit board (FPC) are electrically connected with each other via the transparent conductive film 18 and the GND line 22 and hence, the GND line 20 is not always necessary. However, by forming the GND lines 20, 22, it is possible to further enhance the redundancy of the electric connection.

Further, in this embodiment, even when the GND pad electrode 15 is not provided, the back-surface-side transparent conductive film (CD) and the transparent conductive film 18 can be electrically connected with each other via the conductive member 14 filled in the opening portion 25 and hence, the GND pad electrode 15 is also not always necessary. However, for preventing the occurrence of the connection failure between the back-surface-side transparent conductive film (CD) and the transparent conductive film 18 due to the intrusion of dusts into the inside of the opening portion 25, it is preferable to form the GND pad electrode 15 such that the GND pad electrode 15 covers the opening portion 25. Here, the transparent conductive film 18 may have an elongated strip-shape.

### [Embodiment 3]

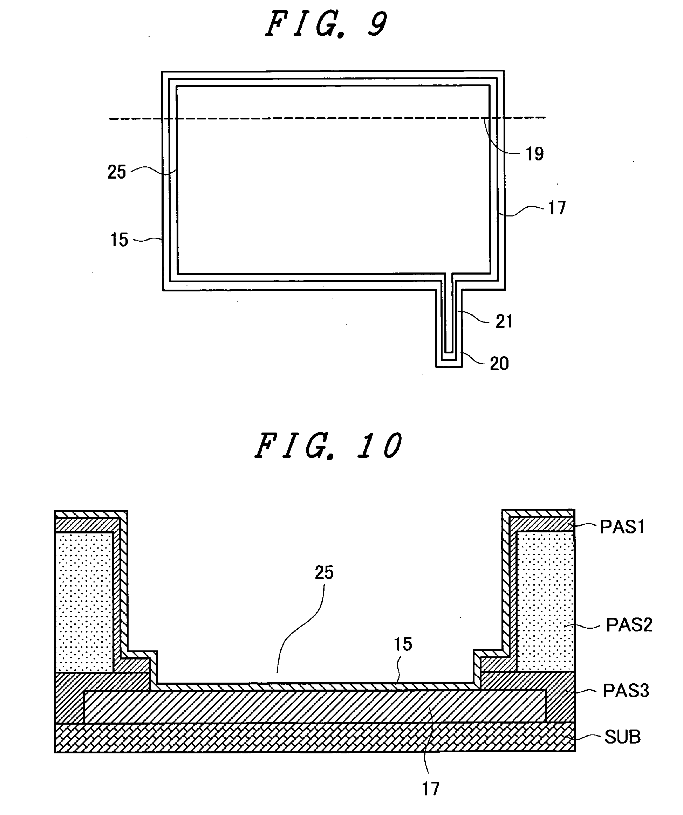

Fig. 9 is a plan view showing the constitution of a GND pad electrode 15 of a liquid crystal display device of an embodiment 3 according to the present invention, and Fig. 10 is a cross-sectional view showing the cross-sectional structure of the GND pad electrode of the liquid crystal display device of the embodiment 3 according to the present invention.

As shown in Fig. 9, the GND pad electrode 15 of the liquid crystal display device of this embodiment is also formed of a rectangular transparent electrode, and the GND pad electrode 15 is made of ITO or the like, for example. Further, the GND pad electrode 15 is connected with a GND terminal (not shown in the drawing) formed on a peripheral portion of one side of a region of a TFT substrate 12 where the TFT substrate 12 does not face a CF substrate 11 in an opposed manner using a GND line 20.

In this embodiment, a metal film 17 and a GND line 21 are formed on the substrate (SUB). The metal film 17 is connected with a GND terminal (not shown in the drawing) formed on a peripheral portion of one side of the region of the TFT substrate 12 where the TFT substrate 12 does not face the CF substrate 11 in an opposed manner using the GND line 21. Here, the metal film 17 and the GND line 21 are made of Al, Al alloy or the like, for example.

In this embodiment, a metal film 17 is also formed into a rectangular shape, and the metal film 17 has an area substantially equal to an area of the GND pad electrode 15. Here, an area of the metal film 17 may preferably be 80% to 120% of an area of the GND pad electrode 15.

Further, in this embodiment, an opening portion 25 which exposes a most portion of the metal film 17 (preferably 80% or more of the metal film 17) is formed. The GND pad electrode 15 and the metal film 17 are electrically connected with each other in the opening portion 25. The GND pad electrode 15 is formed with a size which allows the GND pad electrode 15 to cover the opening portion 25. Here, as shown in Fig. 10, in the region where the opening portion 25 is formed, the interlayer insulation film (PAS2) is eliminated, and the opening portion 25 is formed in the interlayer insulation films PAS1, PAS3.

Accordingly, in this embodiment, even when a stress is generated in the interlayer insulation film (PAS1), there exists no possibility that cracks occur in the GND pad electrode 15 as indicated by A in Fig. 11 or cracks occur in the GND line 20 as indicated by B in Fig. 11. Accordingly, it is possible to prevent the occurrence of the conduction (connection) failure between the back-surface-side transparent conductive film (CD) and the GND terminal of the flexible printed circuit board (FPC) .

Here, in this embodiment, the back-surface-side transparent conductive film (CD) and the GND terminal of the flexible printed circuit board (FPC) are electrically connected with each other via the metal film 17 and the GND line 21 and hence, the GND line 20 is not always necessary. However, by forming the GND lines 20, 21, it is possible to further enhance the redundancy of the electric connection.

Further, in this embodiment, even when the GND pad electrode 15 is not provided, the back-surface-side transparent conductive film (CD) and the metal film 17 can be electrically connected with each other via the conductive member 14 filled in the opening portion 25 and hence, the GND pad electrode 15 is not also always necessary. However, for preventing the occurrence of the connection failure between the back-surface-side transparent conductive film (CD) and the metal film 17 due to the oxidation of the metal film 17 in succeeding manufacturing processing, it is preferable that the GND pad electrode 15 is formed such that the GND pad electrode 15 covers the opening portion 25. Here, the metal film 17 may have an elongated strip-shape.

Although the invention made by the inventors of the present invention have been specifically explained in conjunction with the embodiments heretofore, it is needless to say that the present invention is not limited to the above-mentioned embodiments and various modifications are conceivable without departing from the gist of the present invention.

## Claims

1. A liquid crystal display device comprising:
a first substrate (12);
a second substrate (11); and
liquid crystal sandwiched between the first substrate and the second substrate, wherein
the second substrate includes a back-surface conductive film (CD) on a surface thereof opposite to the liquid crystal, and
the first substrate includes a pad electrode (15) which is formed on the first substrate and is electrically connected with the back-surface conductive film via a conductive member (14), a conductive film (18) which is formed on the first substrate and below the pad electrode, a first connection line which connects the conductive film and a reference voltage terminal, and at least one contact hole (16) which connects the pad electrode and the conductive film.

2. A liquid crystal display device according to claim 1, wherein the at least one contact hole is covered with the second substrate.

3. A liquid crystal display device comprising:
a first substrate (12);
a second substrate (11); and
liquid crystal sandwiched between the first substrate and the second substrate, wherein
the second substrate includes a back-surface conductive film (CD) on a surface thereof opposite to the liquid crystal, and
the first substrate includes a pad electrode (15) which is formed on the first substrate and is electrically connected with the back-surface conductive film via a conductive member (14), a first conductive film which is formed on the first substrate and below the pad electrode, a second conductive film which is formed on the first substrate and below the first conductive film, a first connection line which connects the second conductive film and a reference voltage terminal, a contact portion which connects the pad electrode and the first conductive film, and at least one first contact hole which connects the pad electrode and the second conductive film.

4. A liquid crystal display device according to claim 3, wherein the contact portion includes at least one second contact hole which connects the pad electrode and the second conductive film and at least one third contact hole which connects the pad electrode and the first conductive film.

5. A liquid crystal display device according to claim 3, wherein the at least one first contact hole is covered with the second substrate.

6. A liquid crystal display device according to claim 3, wherein the first conductive film is formed of a transparent conductive film, and the second conductive film is formed of a metal film.

7. A liquid crystal display device comprising:
a first substrate (12);
a second substrate (11); and
liquid crystal sandwiched between the first substrate and the second substrate, wherein
the second substrate includes a back-surface conductive film (CD) on a surface thereof opposite to the liquid crystal,
the first substrate includes a conductive film which is formed below a surface of the first substrate, a first connection line which connects the conductive film and a reference voltage terminal, and an opening portion from which the conductive film is exposed, and
the conductive film is electrically connected with the back-surface conductive film via a conductive member in the inside of the opening portion.

8. A liquid crystal display device according to claim 7, wherein a portion of the opening portion is covered with the second substrate.

9. A liquid crystal display device comprising:
a first substrate (12);
a second substrate (11); and
liquid crystal sandwiched between the first substrate and the second substrate, wherein
the second substrate includes a back-surface conductive film (CD) on a surface thereof opposite to the liquid crystal,
the first substrate includes a conductive film which is formed below a surface of the first substrate, a first connection line which connects the conductive film and a reference voltage terminal, an opening portion from which the conductive film is exposed, and a pad electrode which is formed on the first substrate and covers the opening portion, and
the pad electrode is connected with the conductive film in the inside of the opening portion and is electrically connected with the back-surface conductive film via a conductive member in the inside of the opening portion.

10. A liquid crystal display device according to claim 9, wherein a portion of the opening portion is covered with the second substrate.

11. A liquid crystal display device according to claim 1, 7 or 9, wherein the conductive film of the first substrate is formed of a metal film.

12. A liquid crystal display device according to claim 1, 7 or 9, wherein the conductive film of the first substrate is formed of a transparent conductive film.

13. A liquid crystal display device according to claim 12, wherein a silicon nitride film is arranged between the pad electrode of the first substrate and the transparent conductive film of the first substrate.

14. A liquid crystal display device according to claim 1, wherein the liquid crystal display device includes a second connection line which connects the pad electrode and the reference voltage terminal.

15. A liquid crystal display device according to claim 1, wherein the pad electrode is formed of a transparent conductive film.
